# EUROPÄISCHE PATENTSCHRIFT

(11) **EP 1 884 427 B1**
(45) Veröffentlichungstag und Bekanntmachung des Hinweises auf die Patenterteilung: **12.08.2009**
(21) Anmeldenummer: 07109496.5
(22) Anmeldetag: 04.06.2007
(51) Int. Cl.: B60T 7/10

(54) **Selbstverlängernder Handhebel**
Lever with automatic lengthening
Levier manuel à allongement automatique

(30) Priorität: 27.07.2006 DE 102006034615
(43) Veröffentlichungstag der Anmeldung: 06.02.2008
(73) Patentinhaber: Ford Global Technologies, LLC, Dearborn, MI 48126 (US)
(72) Erfinder: Fischbein, Igor, 50765 Köln (DE)
(74) Vertreter: Dörfler, Thomas

(56) Entgegenhaltungen:
- WO-A-20/04048169
- DE-A1- 10 123 525
- DE-A1- 10 324 040
- DE-A1-4102005 000 80
- JP-A- 58 050 025

## Beschreibung

Die Erfindung betrifft einen Handhebel gemäß dem Oberbegriff des Anspruchs 1, aufweisend
ein Basiselement,
ein um eine Drehachse drehbar am Basiselement angeordnetes Krafteinleitungselement,
ein mit dem Krafteinleitungselement verbundenes Betätigungselement,
wobei die Betätigung über eine Rotationsbewegung des Betätigungselements erfolgt, wodurch ein Drehmoment über das Betätigungselement ausgeübt wird, und das Betätigungselement wenigstens teilweise translatorisch bewegbar angeordnet ist.

Zum Beispiel bei Feststellbremsen, die insbesondere in Kraftfahrzeugen angeordnet sind, handelt es sich aus Kostengründen insbesondere in kleinen Fahrzeugen immer noch um mechanische Bremsen. Diese sind beispielsweise über einen Seilzug mit einem Betätigungselement im Fahrzeuginnenraum verbunden. Allgemein bekannt sind hierbei Handhebel bzw. Handbremshebel, die mit der Feststellbremse verbunden sind. Der Fahrer zieht den Handbremshebel nach oben, wodurch über eine Schwenkbewegung des Handbremshebels ein Drehmoment erzeugt wird, das über den Seilzug in eine Zugkraft umgewandelt wird, wodurch die Klemmkraft der Feststellbremse erzeugt wird.

Unter bestimmten Umgebungsbedingungen wie beispielsweise eine große Neigung der Straße (z. B. 30%) können bei mechanischen Feststellbremsen große Klemmkräfte erforderlich sein, um das Kraftfahrzeug mittels der Feststellbremse gegen ein Wegrollen zu sichern. Um diese Kräfte ohne Schwierigkeiten aufbringen zu können, wäre es vorteilhaft, die Grifflänge des Handbremshebels zu vergrößern. Dieses ist allerdings ausgehend von der Sitzposition und damit einhergehend mit der Greifreichweite und Ziehgeometrie des Fahrers nicht vorteilhaft. Des Weiteren ist es dabei problematisch, daß ein längerer Handbremshebel mit der Gestaltung und Ergonomie des Innenraums kollidiert. Eine Lösungsmöglichkeit wäre der Einsatz von servobetriebenen Feststellbremsen. Diese sind allerdings kostenintensiv.

Die Zusammenfassung der JP 58050025 offenbart einen Handbremshebel. Ein Basisendteil eines fixierten Elementes ist an einem Boden befestigt und weist eine Vielzahl von Zähnen an einer äußeren Umfangsfläche auf. Ein Hebel mit einem Griff hat eine Vielzahl dazu korrespondierender Zähne an seinem Basisende. Wird der Hebel aus einer Ruheposition in eine Gebrauchsposition überführt, wird die Eingriffposition der korrespondierenden Zähne aus einer ersten Position in eine zweite Position überführt. Wenn die Eingriffsposition in die zweite Position überführt wird, erhöht sich das Hebelverhältnis, so dass eine geringe Betätigungskraft eine hohe Wirkkraft erzeugen soll.

Die DE 10 2005 000 804 A1 befasst sich mit einem Handbremshebelsystem zum manuellen Anziehen und Entlasten von zumindest einem Bremsseil. Zumindest ein schwenkbar an einer Halterung gelagerter Dreharm ist mit dem Bremsseil verbunden. Zumindest ein Betätigungshebel ist an einem ersten Ende schwenkbar mit dem Dreharm und an einem zweiten Ende fest mit einem Handgriff verbunden. Der Betätigungshebel ist gleitend an der festen Halterung gelagert, so dass der Handgriff bei der Betätigung des Handbremshebelsystems eine gekrümmte Bahn definiert.

Aus DE 103 24 040 A1 ist ein Handbremshebel, insbesondere für ein Kraftfahrzeug mit mindestens zwei teleskopartig ineinander geführten Rohren zur Beaufschlagung einer Arretiereinrichtung einer Feststellbremse bekannt. In jeder Auszugstellung verharren die Rohre selbsttätig. Eine Beaufschlagung einer den Rohren zugeordneten Einrichtung bewirkt das Lösen der Arretiereinrichtung. Zur Betätigung der Feststellbremse werden die beiden Rohre auf eine gewünschte Länge teleskopisiert. Nachteilig hierbei ist, daß der Fahrer in Abhängigkeit der eingestellten Länge nicht den optimalen Krafteintrag erzielt und er auch keinen Anhaltspunkt besitzt, wie die optimale Einstellung des Handbremshebels für die aktuelle Anwendungssituation wäre.

Der Erfindung liegt die Aufgabe zugrunde, einen mit einfachen Mitteln verbesserten Handhebel bereit zustellen, durch den bezogen auf die Anwendungssituation die Zugkraft auf den Handhebel im wesentlichen konstant gehalten wird, und gleichzeitig auch höhere Kräfte beispielsweise in eine Feststellbremse einbringbar sind.

Erfindungsgemäß wird die Aufgabe durch einen Handhebel mit den Merkmalen des Anspruchs 1 gelöst, wobei die Translationsbewegung während der Rotationsbewegung des Betätigungselements bei der Überführung aus seiner Ruheposition in eine Gebrauchsposition derart erfolgt, daß sich der Abstand zwischen der Drehachse des Krafteinleitungselementes und einem vorderen Ende bzw. einem Kraftangriffspunkt an dem vorderen Ende des Betätigungselements vergrößert.

Auf diese Weise wird ein Handhebel, bzw. ein Handbremshebel bereitgestellt, der es ermöglicht, daß z. B. ein Fahrer während des Betätigens der beispielhaften Feststellbremse lediglich im Wesentlichen konstante Kräfte auch für besondere Betriebszustände, die höhere Feststellkräfte erforderlich machen, bereitstellen muß. Hierbei ist vorteilhaft, daß sich der Handhebel, bzw. der Handbremshebel bei seiner Betätigung quasi selbsttätig verlängert wenn der Handhebel bzw. der Handbremshebel aus seiner Ruheposition in eine Gebrauchsposition überführt wird bzw. selbsttätig verkürzt wenn der Handhebel bzw. Handbremshebel aus einer Gebrauchsposition in seine Ruheposition zurückgeführt wird.

Der erfindungsgemäße Handhebel eignet sich besonders bevorzugt zur Verwendung in einem Kraftfahrzeug zur Betätigung der Feststellbremse, ist aber auf diese Anwendung nicht beschränkt.

Zweckmäßig im Sinn der Erfindung ist, daß sich das Betätigungselement wenigstens zu einem Teil des Krafteinleitungselements relativ translatorisch bewegt, wobei es sich bei diesem Teil bevorzugt um einen rohrförmigen Abschnitt handelt.

Günstiger Weise ist vorgesehen, daß ein Bewegungsüberträger zwischen Basiselement und Betätigungselement vorgesehen ist. Durch den Bewegungsüberträger wird eine Steuerung der Translationsbewegung auf einfache Weise möglich.

Eine vorteilhafte Ausgestaltung der Erfindung sieht vor, daß es sich bei dem Bewegungsüberträger um einen zahnradartigen Abschnitt, der bevorzugt am Basiselement angeordnet ist, handelt, der mit einer am Betätigungselement angeordneten Zahnstange im Eingriff ist. Durch das Vorsehen der Zahnstangen/Zahnradabschnitt-Kombination wird eine besonders präzise Bewegungsübertragung gewährleistet.

Des Weiteren sieht die Erfindung vorteilhafterweise vor, daß es sich bei dem Bewegungsüberträger um wenigstens eine Kugel und/oder um wenigstens eine Feder handelt. Alternativ handelt es sich bei dem Bewegungsüberträger zum einen elastisch verformbaren Abschnitt des Betätigungselements. Die Bewegungsüberträger sind dabei vorteilhafter Weise innerhalb des Krafteinleitungselements angeordnet, wobei die Bewegungsüberträger besonders bevorzugt auf einen Endabschnitt des Betätigungselements wirken.

Vorteilhafter Weise weist das Basiselement ein Widerlager für den Bewegungsüberträger auf. Das Widerlager wirkt dabei über den Bewegungsüberträger auf das Betätigungselement und schiebt dieses nach vorne.

Des Weiteren sieht die Erfindung vorteilhafterweise vor, daß die Feststellbremse eine mechanische Bremse ist, die bevorzugt mit dem Krafteinleitungselement über einen Seilzug verbunden ist. Eine mechanische Feststellbremse stellt eine kostengünstige Ausführung dar.

Eine weitere Lehre der Erfindung sieht vor, daß ein Arretiermechanismus vorgesehen ist, wobei bevorzugt ein Lösemechanismus für den Arretiermechanismus vorgesehen ist, der besonders bevorzugt am Betätigungselement angeordnet ist.

Zweckmäßig im Sinn der Erfindung ist, daß beim Lösen der Feststellbremse während des Rückführens des Betätigungselements die während des Festsetzens erreichte Verlängerung des Betätigungselements rückgängig gemacht wird. Dadurch wird gewährleitstet, daß die Innenraumgestaltung unabhängig von der Länge der Feststellbremse vorgenommen werden kann.

Weitere Vorteilhafte Ausgestaltungen der Erfindung sind in den Unteransprüchen und der folgenden Figurenbeschreibung offenbart. Es zeigen:
- Fig. 1: eine teilgeschnittene Ansicht einer ersten erfindungsgemäßen Ausführungsform,
- Fig. 2: eine Explosionsansicht zu Fig. 1,
- Fig. 3: eine teilgeschnittene Ansicht einer zweiten erfindungsgemäßen Ausführungsform, und
- Fig. 4: einen Ausschnitt eines Bereichs einer dritten erfindungsgemäßen Ausführungsform in Teilgeschnittener Form.

In den unterschiedlichen Figuren sind gleiche Teile stets mit denselben Bezugszeichen versehen, weswegen diese in der Regel auch nur einmal beschrieben werden.

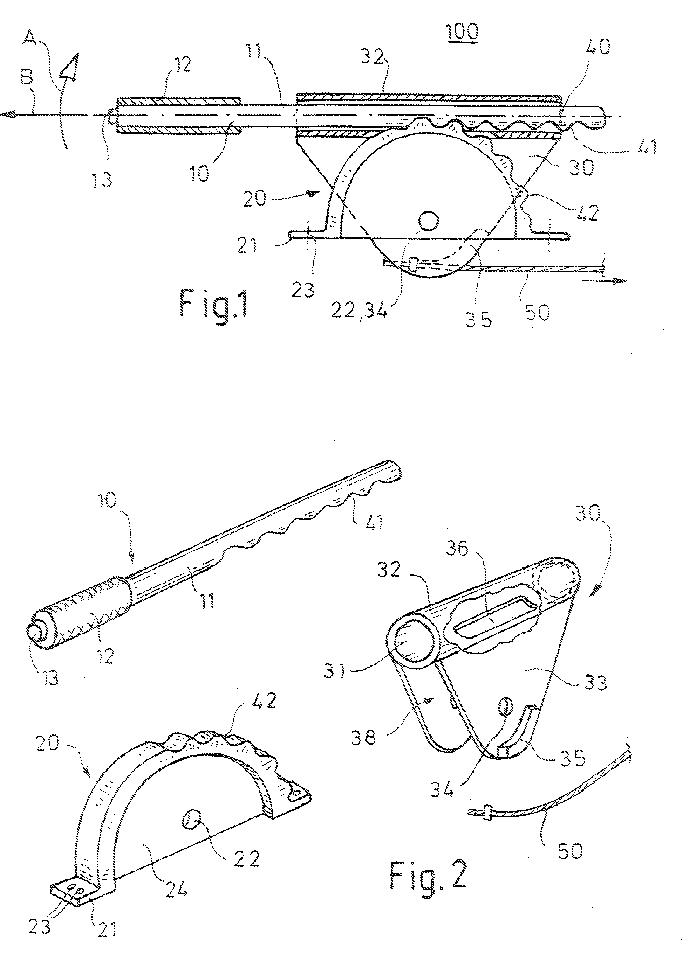

Fig. 1 zeigt eine erste Ausführungsform eines erfindungsgemäßen Handhebels 100, der im Folgenden in seiner bevorzugten Ausgestaltung als Handbremshebel 100 bezeichnet wird, in geschnittener Ansicht. Der Handbremshebel 100 weist ein Betätigungselement 10 in Form eines Stabes 11, ein Basiselement 20 zur beispielhaften Anordnung des Handbremshebels 100 in einem Kraftfahrzeug und ein Krafteinleitungselement 30 beispielsweise zum Einleiten einer Feststellkraft für eine Feststellbremse auf. Das Krafteinleitungselement 30 ist mit einem Seilzug 50 der Feststellbremse (nicht dargestellt) verbunden. Weiter weist der Handbremshebel 100 einen Bewegungsüberträger 40 auf.

Die Betätigung zum Festsetzen der beispielhaften Feststellbremse erfolgt über eine Rotationsbewegung des Betätigungselements 10, wodurch ein Drehmoment über das Betätigungselement 10 ausgeübt wird. Das Betätigungselement 10 ist wenigstens teilweise translatorisch bewegbar angeordnet.

Die Translationsbewegung während der Rotationsbewegung des Betätigungselements 10 zum Festsetzen der Feststellbremse erfolgt bei der Überführung aus seiner Ruheposition in eine Gebrauchsposition derart, dass sich der Abstand zwischen der Drehachse des Krafteinleitungselements 30 und einem vorderen Ende bzw. einem Kraftangriffspunkt an dem vorderen Ende des Betätigungselements 10 vergrößert.

Fig. 2 zeigt eine Explosionsansicht des erfindungsgemäßen Handbremshebels 100. Das Betätigungselement 10 besteht aus einem Stab 11 an dessen vorderem Ende ein Griff 12 und ein Auslöseelement 13 angeordnet ist. Im hinteren Drittel des Stabes 11 ist ein Zahnstangenbereich 41 als Bestandteil des Bewegungsüberträgers 40 vorgesehen. Das Betätigungselement 10 ist in dem Krafteinleitungselement 30, hier speziell in einem Führungsinnenraum 31 eines Führungsrohres 32 bewegbar angeordnet. Am Führungsrohr 32 sind zwei Seitenschenkel 33 angeordnet, die parallel zueinander am Führungsrohr 32 angeordnet sind und im Bereich ihres unteren Endes jeweils eine Bohrung 34 aufweisen, durch die eine Achse (nicht dargestellt) einsetzbar ist. Die Seitenschenkel 33 weisen eine im Wesentlichen parabelartige Fläche auf, und sind mit ihrer Basisseite mit dem Führungsrohr 32 derart verbunden, daß diese zueinander Beabstandet sind, so daß ein Einsatzraum 38 gebildet ist. Der Abstand ist in dem dargestellten Ausführungsbeispiel bevorzugt etwas kleiner als ein Durchmesser des Führungsrohres 32, und ist natürlich korrespondierend zu dem Basiselement 20 ausgeführt. Weiter ist denkbar, daß auch eine einseitige Lagerung des Basiselementes 20 vorgesehen ist. Die Achse stellt dann eine Drehachse des Krafteinleitungselements 30 dar. Am unteren Ende der Seitenschenkel 33 ist eine Führung 35 für den Seilzug 50 des Handbremshebels 100 vorgesehen, die bevorzugt entsprechend dem parabelartigen Verlauf einer Seitenkante der Seitenschenkel 33 angepaßt ist. Die Führung 35 dient der Befestigung und dem Aufrollen des Zugseiles 50. Durch eine exzentrische Anordnung der Führung 35 gegenüber der Drehachse wird eine Veränderung des Übersetzungsverhältnisses erreicht. Die Führung 35 ist als Erhebung ausgeführt und erstreckt sich von dem unteren Ende als Parabelabschnitt in Richtung zum Führungsrohr 32, was bedeutet, daß die Führung 35 in dem dargestellten Ausführungsbeispiel nicht bis zum Führungsrohr 32 hochgezogen ist.

Zwischen den Seitenschenkeln 33 befindet sich der Einsetzraum 38, in den das Basiselement 20 eingesetzt wird. An seinem oberen Ende wird der Einsetzraum 38 durch das Führungsrohr 32 begrenzt. Im Bereich des Einsetzraums 38 weist das Führungsrohr 32 eine Öffnung 36 auf, durch die der Führungsinnenraum 31 mit dem Einsetzraum 38 verbunden ist.

Das Basiselement 20 weist ein Grundelement 24 auf, an dem Befestigungsvorsprünge 21 mit Haltebohrungen 23 und eine Bohrung 22 zur Aufnahme der Drehachse (nicht dargestellt) angeordnet sind. Des Weiteren weist das Grundelement 24 einen Zahnradabschnitt 42 auf, der eine korrespondierende Zahnung zum Zahnstangenbereich 41 des Betätigungselements 10 hat, so daß ein weiterer Bestandteil des Bewegungsüberträgers 40 gebildet ist, der in dem Ausführungsbeispiel nach Figur 1 und 2 aus dem Zahnstangenbereich 41 und dem Zahnradabschnitt 42 gebildet ist.

Das Krafteinleitungselement 30 ist so auf dem Basiselement 20 angeordnet, daß die Bohrungen 22 und 34 fluchten und die Achse als Drehachse durch die Bohrungen 22, 34 einsetzbar ist. Das Betätigungselement 10 ist in das Führungsrohr 32 eingesetzt. Im montierten Zustand befinden sich Zahnstangenbereich 41 und Zahnradabschnitt 42 im Eingriff.

Wird der Handbremshebel 100 zum Festsetzen der Feststellbremse eingesetzt, so wird das Betätigungselement 10 aus seiner in Figur 1 dargestellten Ruheposition in Pfeilrichtung A bewegt, also hochgezogen. Der Stab 11 rollt dabei mit seinem Zahnstangenbereich 41 auf dem Zahnradabschnitt 42 ab und erfährt dabei eine Translationsbewegung in Richtung des Pfeils B, also in Richtung zur linken Zeichnungsebene. Das Betätigungselement 10 und damit der Griff 12 werden nach vorne aus dem Führungsrohr 32 geschoben, während sich das Krafteinleitungselement 30 um die Drehachse dreht. Hierbei verschwenkt ein zum Auslöseelement 13 gegenüberliegendes hinteres Ende 14 des Stabes 11 in Richtung zur unteren Zeichnungsebene. Dadurch verlängert sich der Hebelarm und das Drehmoment erhöht sich entsprechend bei gleich bleibender Kraft, die auf den Griff 12 des Betätigungselements 10 ausgeübt wird, womit sich die über den Seilzug 50 in die Feststellbremse eingeleitete Zugkraft erhöht.

Soll die Feststellbremse wieder gelöst werden, so wird das Auslöseelement 13 betätigt und das Betätigungselement 10 wird entgegen der Pfeilrichtung A bewegt, wodurch die Schwenkbewegung des Krafteinleitungselements 30 umgekehrt wird und das Abrollen des Zahnstangenbereichs 41 auf dem Zahnradabschnitt 42 eine translatorisch Rückbewegung des Stabs 11 bewirkt, so daß das Betätigungselement 10 in der in Figur dargestellten Ruheposition des Handbremshebels 100 wieder vollständig eingefahren ist.

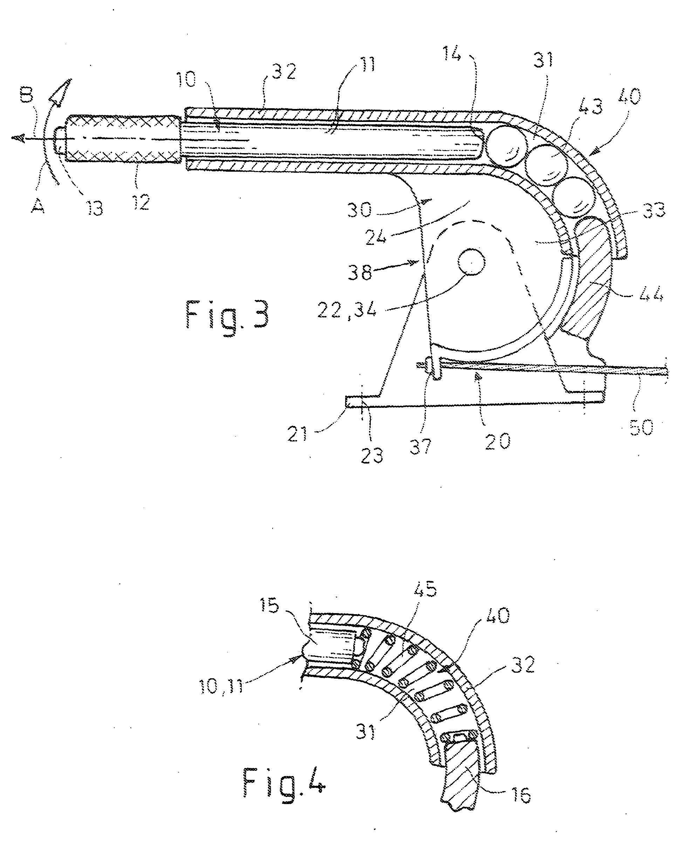

Fig. 3 beschreibt eine zweite Ausführungsform des Handbremshebels 100. Fig. 4 beschreibt eine Alternative zu der Ausführungsform der Fig. 3, bei der ein alternativer Bewegungsüberträger vorgesehen ist.

Das Führungsrohr 32 ist in seinem hinteren Abschnitt in Richtung zur unteren Zeichnungsebene gebogen ausgeführt. Im gebogenen Abschnitt befindet sich der Bewegungsüberträger 40, der die Schwenkbewegung des Krafteinleitungselements 30 um das Basiselement 20 in eine Translationsbewegung des Betätigungselements 10 überführt. Das Betätigungselement 10 ist an seinem hinteren Ende 14 mit dem Bewegungsüberträger 40 verbunden. Das Basiselement 20 weist ein entsprechend zum gebogenen Abschnitt des Führungsrohres 32 ausgeführtes Widerlager 44 auf, über welches das Führungsrohr 32 beim Schwenken des Krafteinleitungselements 30 geführt wird. Das Widerlager 44 ist an seinem vorderen Ende mit dem Bewegungsüberträger 40 verbunden, wobei das Widerlager 44 in dem in Figur 3 dargestellten Ausführungsbeispiel in der Ruheposition des Handbremshebels 100 an dem Bewegungsüberträger 40 anliegt. Das Krafteinleitungselement 30 weist einen Seilzugverbinder 37 auf, über den der Seilzug 50 mit dem Krafteinleitungselement 30 verbunden ist. Der Bewegungsüberträger 40 besteht in der Ausführungsform nach Fig. 3 aus zumindest einer Kugel 43, wobei in dem dargestellten Ausführungsbeispiel drei Kugeln 43 vorgesehen sind. Natürlich können auch mehr oder weniger Kugeln 43 vorgesehen sein.

Bei der Überführung des Handbremshebels 100 aus seiner Ruheposition in eine beliebige Gebrauchsposition wird der Stab 11 durch Einwirken des Bewegungsüberträgers 40 bzw. der einerseits an dem Widerlager 44 und andererseits an dem hinteren Ende 14 des Stabes 11 anliegenden Kugeln 43 gleichzeitig mit seiner Rotationsbewegung translatorisch in Richtung des Pfeils B, also zur linken Zeichnungsebene aus dem Führungsrohr 32 herausbewegt, wodurch sich das Betätigungselement 10 bzw. der Stab 11 quasi selbst verlängert.

In Fig. 4 ist der Bewegungsüberträger 40 ein Federelement 45. Der Stab 11 weist einen Vorderabschnitt 15 und einen Hinterabschnitt 16 auf, zwischen denen das Federelement 45 angeordnet ist. Das Führungsrohr 32 ist dabei wie in dem Ausführungsbeispiel zu Figur 3 mit einem gebogenen Abschnitt ausgeführt. Der Hinterabschnitt 16 ist dabei direkt mit dem Basiselement 20 oder dem Widerlager 44, als weitere Alternative zu den Kugeln 43, verbunden (nicht dargestellt). Das Federelement 45 kann dabei auch ein Abschnitt des Stabs 11 mit elastischeren Eigenschaften als die der Abschnitte 15 und 16 sein.

Beim Schwenken des Betätigungselements 10 in Richtung des Pfeils A wird das Führungsrohr 32 über das Widerlager 44 bzw. den Hinterabschnitt 16 geführt. Dabei wirkt das Widerlager 44 bzw. der Hinterabschnitt 16 auf das Federelement 45 und drückt das Betätigungselement in Richtung B, also zur linken Zeichnungsebene.

Denkbar ist, dass der Bewegungsüberträger 40 auch eine geeignete Flüssigkeit sein kann, die den Raum zwischen dem Stab 11 und dem Widerlager 44 bevorzugt vollständig ausfüllt.

Natürlich ist die Erfindung nicht auf das dargestellte Ausführungsbeispiel als Handbremshebel 100 in einem Kraftfahrzeug beschränkt. Selbstverständlich kann der Handhebel 100 mit seiner erfindungsgemäßen Ausgestaltung an allen Vorrichtungen eingesetzt sein, bei denen ein sich selbst verlängernder bzw. verkürzender Handhebel 100 sinnvoll ist, beispielsweise bei einem Anhänger.

### Bezugszeichenliste

- 100: Handhebel
- 10: Betätigungselement
- 11: Stab
- 12: Griff
- 13: Auslöseelement
- 14: hinteres Ende
- 15: Vorderabschnitt
- 16: Hinterabschnitt
- 20: Basiselement
- 21: Befestigungsvorsprung
- 22: Bohrung
- 23: Bohrung
- 24: Grundelement
- 30: Krafteinleitungselement
- 31: Führungsinnenraum
- 32: Führungsrohr
- 33: Seitenschenkel
- 34: Bohrung
- 35: Führung
- 36: Öffnung
- 37: Seilzugverbinder
- 38: Einsetzraum
- 40: Bewegungsüberträger
- 41: Zahnstangenbereich
- 42: Zahnradabschnitt
- 43: Kugel
- 44: Widerlager
- 45: Federelement
- 50: Seilzug
- A: Schwenkrichtung
- B: Translationsbewegung

## Patentansprüche

1. Handhebel aufweisend
ein Basiselement (20)
ein um eine Drehachse drehbar am Basiselement (20) angeordnetes Krafteinleitungselement (30),
ein mit dem Krafteinleitungselement (30) verbundenes Betätigungselement (10),
wobei die Betätigung über eine Rotationsbewegung des Betätigungselements (10) erfolgt, wodurch ein Drehmoment über das Betätigungselement (10) ausgeübt wird, und das Betätigungselement (10) wenigstens teilweise translatorisch bewegbar angeordnet ist, wobei die Translationsbewegung während der Rotationsbewegung des Betätigungselements (10) bei der Überführung aus seiner Ruheposition in eine Gebrauchsposition derart erfolgt, daß sich der Abstand zwischen der Drehachse des Krafteinleitungselement (30) und einem vorderen Ende des Betätigungselements (10) vergrößert **dadurch gekennzeichnet, daß** das Betätigungselement (10) bewegbar in einem Führungsrohr (32) des Krafteinleitungselementes (30) eingesetzt ist, wobei ein Bewegungsüberträger (40) zwischen einem Basiselement (20) und dem Betätigungselement (10) so vorgesehen ist, das eine Schwenkbewegung des Krafteinleitungselementes (30) um das Basiselement (20) in eine Translationsbewegung des Betätigungselementes (10) überführt wird, so dass das Betätigungselement (10) bei der Überführung aus seiner Ruheposition in eine Gebrauchsposition nach vorne aus dem Führungsrohr (32) geschoben wird, während sich das Krafteinleitungselement (30) um eine Drehachse dreht.

2. Handhebel nach Anspruch 1, **dadurch gekennzeichnet, daß** es sich bei dem Bewegungsüberträger (40) um einen zahnradartigen Abschnitt (42), der bevorzugt am Basiselement (20) angeordnet ist, handelt, der mit einer am Betätigungselement (10) angeordneten Zahnstange (41) im Eingriff ist

3. Handhebel nach Anspruch 1, **dadurch gekennzeichnet, daß** es sich bei dem Bewegungsüberträger (40) um wenigstens eine Kugel (43) und/oder wenigstens eine Feder (45) handelt.

4. Handhebel nach Anspruch 1, **dadurch gekennzeichnet, daß** es sich bei dem Bewegungsüberträger (40) um einen elastisch verformbaren Abschnitt (45) des Betätigungselements (10) handelt.

5. Handhebel nach einem der Ansprüche 3 oder 4, **dadurch gekennzeichnet, daß** das Basiselement (20) ein Widerlager (44) für den Bewegungsüberträger (40) aufweist.

6. Handhebel nach einem der Ansprüche 1 bis 5, der eine Feststellbremse betätigt, die eine mechanische Bremse ist, die bevorzugt mit dem Krafteinleitungselement (30) über einen Seilzug (50) verbunden ist.

7. Handhebel nach einem der Ansprüche 1 bis 6, **dadurch gekennzeichnet, daß** ein Arretiermechanismus vorgesehen ist, wobei bevorzugt ein Auslöseelement (13) für den Arretiermechanismus vorgesehen ist, der besonders bevorzugt am Betätigungselement (10) angeordnet ist.

## Claims

1. Hand lever, having
a base element (20),
a force application element (30) arranged on the base element (20) in a manner such that it can rotate about an axis of rotation, and
an actuating element (10) connected to the force application element (30),
wherein the actuation takes place via a rotational movement of the actuating element (10), as a result of which of torque is exerted via the actuating element (10), and the actuating element (10) is arranged such that it is at least partially moveable in a translational manner, wherein the translational movement during the rotational movement of the actuating element (10) upon transfer from its inoperative position into a use position takes place in such a manner that the distance between the axis of rotation of the force application element (30) and a front end of the actuating element (10) is increased, **characterized in that** the actuating element (10) is inserted moveably in a guide tube (32) of the force application element (30), with a movement transmitter (40) being provided between a base element (20) and the actuating element (10) in such a manner that a pivoting movement of the force application element (30) about the base element (20) is converted into a translational movement of the actuating element (10) such that the actuating element (10), upon transfer from its inoperative position into a use position, is pushed forwards out of the guide tube (32) while the force application element (30) rotates about an axis of rotation.

2. Hand lever according to Claim 1, **characterized in that** the movement transmitter (40) is a gearwheel-like section (42) which is preferably arranged on the base element (20) which is in engagement with a rack (41) arranged on the actuating element (10).

3. Hand lever according to Claim 1, **characterized in that** the movement transmitter (40) is at least one ball (43) and/or at least one spring (45).

4. Hand lever according to Claim 1, **characterized in that** the movement transmitter (40) is an elastically deformable section (45) of the actuating element (10).

5. Hand lever according to either of Claims 3 and 4, **characterized in that** the base element (20) has an abutment (44) for the movement transmitter (40).

6. Hand lever according to one of Claims 1 to 5, said hand lever actuating a parking brake which is a mechanical brake which is preferably connected to the force application element (30) via a cable (50).

7. Hand lever according to one of Claims 1 to 6, **characterized in that** a locking mechanism is provided, with a triggering element (13) preferably being provided for the locking mechanism, said triggering element particularly preferably being arranged on the actuating element (10).

## Revendications

1. Levier manuel présentant :
un élément de base (20),
un élément d'introduction de force (30) disposé sur l'élément de base (20) de manière à pouvoir tourner autour d'un axe de rotation,
un élément d'actionnement (10) connecté à l'élément d'introduction de force (30),
l'actionnement s'effectuant par le biais d'un mouvement de rotation de l'élément d'actionnement (10), de sorte qu'un couple soit exercé par le biais de l'élément d'actionnement (10), et
l'élément d'actionnement (10) étant disposé de manière à pouvoir être déplacé en translation au moins en partie, le mouvement de translation s'effectuant pendant le mouvement de rotation de l'élément d'actionnement (10) lors du transfert hors de sa position de repos dans une position d'utilisation de telle sorte que la distance entre l'axe de rotation de l'élément d'introduction de force (30) et une extrémité avant de l'élément d'actionnement (10) augmente, **caractérisé en ce que** l'élément d'actionnement (10) est inséré de manière déplaçable dans un tube de guidage (32) de l'élément d'introduction de force (30), un dispositif de transfert de mouvement (40) étant prévu entre un élément de base (20) et l'élément d'actionnement (10), de telle sorte qu'un mouvement de pivotement de l'élément d'introduction de force (30) autour de l'élément de base (20) soit transféré en un mouvement de translation de l'élément d'actionnement (10), de sorte que l'élément d'actionnement (10), lors du transfert de sa position de repos dans une position d'utilisation, soit poussé vers l'avant hors du tube de guidage (32), tandis que l'élément d'introduction de force (30) tourne autour d'un axe de rotation.

2. Levier manuel selon la revendication 1, **caractérisé en ce que** le dispositif de transfert de mouvement (40) est une portion de type roue dentée (42), qui est de préférence disposée sur l'élément de base (20), et qui est en prise avec une crémaillère (41) disposée sur l'élément d' actionnement (10).

3. Levier manuel selon la revendication 1, **caractérisé en ce que** le dispositif de transfert de mouvement (40) est au moins une bille (43) et/ou au moins un ressort (45).

4. Levier manuel selon la revendication 1, **caractérisé en ce que** le dispositif de transfert de mouvement (40) est une portion déformable élastiquement (45) de l'élément d'actionnement (10).

5. Levier manuel selon l'une quelconque des revendications 3 ou 4, **caractérisé en ce que** l'élément de base (20) présente une butée (44) pour le dispositif de transfert de mouvement (40).

6. Levier manuel selon l'une quelconque des revendications 1 à 5, qui actionne un frein de service, qui est un frein mécanique, qui est de préférence connecté à l'élément d'introduction de force (30) par le biais d'un câble Bowden (50).

7. Levier manuel selon l'une quelconque des revendications 1 à 6, **caractérisé en ce que** l'on prévoit un mécanisme de blocage, et l'on prévoit de préférence un élément de déclenchement (13) pour le mécanisme de blocage, qui est particulièrement préférablement disposé sur l'élément d'actionnement (10).
